(19) Europäisches Patentamt
European Patent Office
Office européen des brevets

(11) EP 4 498 232 A1

(12) EUROPEAN PATENT APPLICATION

(43) Date of publication:
29.01.2025 Bulletin 2025/05

(51) International Patent Classification (IPC):
G06F 8/60 (2018.01)

(21) Application number: 24187735.6

(52) Cooperative Patent Classification (CPC):
G06F 8/60

(22) Date of filing: 10.07.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.07.2023 FI 20235843

(71) Applicant: Nokia Solutions and Networks Oy
02610 Espoo (FI)

(72) Inventors:
• LE PALLEC, Michel
Massy (FR)
• BUI, Dinh Thai
Châtenay-Malabry (FR)

(74) Representative: Nokia EPO representatives
Nokia Technologies Oy
Karakaari 7
02610 Espoo (FI)

(54) METHOD AND APPARATUS FOR THE DEPLOYMENT OF DISTRIBUTED APPLICATIONS IN A MULTI-DOMAINS NETWORK ENVIRONMENT

(57) An application manager and application agents are disclosed enabling the distributed deployment of a target application in a multiple domains network environment. The disclosed application manager and application agents include means for discovering network resources and compute resources, in the multiple domains, that best meet the requirements of a target graph while being compliant with target parameters representative of requirements or constraints to be met when deploying the target application.

The target application is composed of application component functions and intermediate communication links represented by a target graph. The application agents are responsible for for discovering, in their own domain, network and compute resources capable of mapping parts of the target application.

FIG.5

**Description**

TECHNICAL FIELD

Various example embodiments relate generally to an application management method, an application agency method, an application manager and an application agent for deploying a target application in a network environment over multiple domains comprising either network resources or both network and compute resources.

BACKGROUND

The network slice concept, specified by several standard bodies (3GPP, IETF, ETSI ZSM, GSMA...) is defined as a logic partition of infrastructure resources to meet a given communication service level agreement. Typically, a set of network and compute resources is used to support virtual networking functions in order to provide a communication service with a related service level agreement defined by communication parameters such as the communication latency.

Similarly, a concept of application slicing is defined at the application layer, where network and compute resources in multiple domains of a network environment are used for distributed deployment of an application.

A main challenge of application slicing is to discover the network and compute resources in the multiple domains of the network environment that best meet the requirements of the application. For example, in processing offload scenarios such as virtual reality or metaverse applications, latency is a critical requirement and depends significantly on the transport and processing latency introduced respectively by the network and compute resources which are selected for deploying the virtual reality or metaverse applications.

SUMMARY

According to some aspects, there is provided the subject matter of the independent claims. Some further aspects are defined in the dependent claims.

According to a first aspect, an application management method is disclosed for deploying a target application over multiple domains in a network environment, a domain comprising either network resources or both network and compute resources, and an application agent responsible for discovering, in the domain, network and compute resources capable of mapping parts of the target application, the target application being composed of application component functions and intermediate communication flows represented as a target graph. The application management method comprises :

- sending a discovery request message to an application agent, for distributed discovery of deployment solutions for the target application across the multiple domains, said discovery request message comprising :
- solution information representative of a null deployment solution for the target graph,
- graph information relating to the target graph, and
- metric information relating to one or more target parameters associated with the target application,
- receiving from one or more application agents in the multiple domains, deployment solutions which do provide a complete mapping of the target graph to network and compute resources, said deployment solutions being compliant with the target parameters,
- selecting a deployment solution among the received deployment solutions.

According to a second aspect, an application agency method is disclosed for use in an agent domain in a multiple domains network environment, the agent domain comprising either network resources or both network and compute resources, and an application agent responsible for discovering network and compute resources in the agent domain for deploying a target application composed of applications component functions and intermediate communication flows represented by a target graph. The application agency method comprises:

- receiving a discovery request message from an application manager, or from a previous application agent in a previous domain, said discovery request message comprising:
- solution information representative of zero, one or more partial deployment solutions for the target graph, said partial deployment solutions being previously discovered by one or more previous application agent in one or more previous domains when the discovery request message originates from a previous application agent, and said partial deployment solution being a null deployment solution when the discovery request message originates from the application manager,
- graph information which enable determining missing parts of the target graph, and
- metric information representative of how the partial deployment solutions impact one or more target parameters associated with the target application,

- and, upon reception of said discovery request message:
- searching domain solutions in the agent domain by mapping missing parts of the target graph to network and compute resources in the agent domain, said missing parts being obtained from the received graph information,
- obtaining updated deployment solutions from the partial deployment solutions and the domain solutions,
- updating the received metric information to reflect how the updated deployment solutions impact the target parameters,
- updating the received graph information to take into account the updated deployment solutions,
- relaying updated deployment solutions which are compliant with the target parameters and do not provide a complete mapping of the target graph to one or more next application agents for further discovery,
- sending a reply message to the application manager including updated deployment solutions which are compliant with the target parameters and do provide a complete mapping of the target graph.

In an embodiment of the disclosed application agency method, the solution information comprises one or more chains of domain solution identifiers, wherein a given chain corresponds to a given partial deployment solution and a domain solution identifier in the given chain identifies a given domain solution part of the given partial deployment solution.

In an embodiment of the disclosed application agency method, the domain solution identifier further identifies the application agent associated with the domain solution, and the application agency method comprises excluding application agents identified in the chains of domain solution identifiers of the received solution information from relaying.

In an embodiment, the disclosed application management method further comprises initializing the graph information to the target graph or to an empty graph.

In an embodiment of the disclosed application agency method, updating the received graph information comprises:

- when the graph information is initialized to the target graph by the application manager, decrementing the graph information by removing parts corresponding to the domain solutions obtained by the application agent, or
- when the graph information is initialized to an empty graph by the application manager, incrementing the graph information by adding parts corresponding to the domain solutions obtained by the application agent.

In an embodiment, the disclosed application management method further comprises initializing the metric information to the target parameters or to a null value.

In embodiment of the disclosed application agency method, updating the received metric information comprises:

when the metric information is initialized to the target parameters by the application manager, decrement the received metric information to reflect how the domain solutions obtained by the application agent impact the target parameters, or

when the metric information is initialized to a null value by the application manager, increment the received metric information to reflect how the domain solutions obtained by the application agent impact the target parameters.

In an embodiment of the disclosed application agency method and the disclosed application management method, the target parameters relate to a latency requirement and/or an energy consumption requirement and/or a business cost requirement and/or a reliability requirement, and/or a security requirement, and/or a trust requirement.

In an embodiment of the disclosed application agency method and the disclosed application management method, the discovery request message comprises configuration information to configure the receiving application agent with a discovery scheme.

In an embodiment of the disclosed application agency method and the disclosed application management method, the configuration information comprises:

- limit values for testing compliancy of the partial deployment solutions with the target graph and the target parameters, and/or
- a filtering rule to be applied to filter out updated deployment solutions that are not compliant with the target parameters; and/or
- a relaying rule to be applied to relay updated deployment solutions that are compliant with the target parameters; and/or
- a reply rule to be applied for sending a reply message including updated deployment solutions which are compliant with the target parameters.

In an embodiment of the disclosed application agency method and the disclosed application management method, the configuration information comprises the target graph.

In an embodiment of the disclosed application agency method and the disclosed application management method, the configuration information comprises a condition for terminating the discovery.

In an embodiment, the disclosed application agency method further comprises terminating discovery when no compliant updated deployment solutions providing a complete mapping of the target graph has been obtained after a certain condition is reached.

In an embodiment, the disclosed application agency method further comprises terminating discovery upon reception of a discovery cancellation message from the application manager.

In an embodiment of the disclosed application agency method, the domain solution is defined according to one or more input interfaces of an agent domain and one or more output interface of said agent domain with adjacent domains, the intermediate communication flows being directed from the one or more input interfaces to the one or more output interfaces.

In a third aspect, an application agent is disclosed for implementing the steps of an application agency method as disclosed herein.

In an embodiment, when implemented in an agent domain delineated by one or more peering points or nodes or gateways, the application agent is distributed and co-located with one or several peering points or nodes or gateways.

In a fourth aspect, an application manager is disclosed for implementing the steps of an application management method as disclosed herein.

In a fifth aspect, an agent domain is disclosed comprising an application manager and an application agent as disclosed herein, wherein the discovery request message is sent by said application manager to said application agent.

In an embodiment, the disclosed agent domain comprises one or more user equipment or one or more IoT devices.

In an embodiment, the application manager and respectively the application agent comprise means for performing one or more or all steps of the application management method and respectively the application agency method as disclosed herein.

The means may include circuitry configured to perform one or more or all steps of the application management method and respectively the application agency method as disclosed herein. The circuitry may be dedicated circuitry. The means may also include at least one processor and at least one memory including computer program code, wherein the at least one memory and the computer program code are configured to, with the at least one processor, cause the application manager and respectively the application agent to perform one or more or all steps of the application management method and respectively the application agency method as disclosed herein.

The application management method and the application agency method may be carried out by a user equipment or an IoT device in the network. The application manager and the application agent which receives the discovery request message sent by the application manager may be collocated in the same user equipment or IoT device.

According to another aspect a computer program product is disclosed comprising program instructions which, when executed on an apparatus cause the apparatus to carry out the application management method and/or the application agent method as disclosed herein.

According to an embodiment the disclosed computer program product is embodied as a computer readable medium or directly loadable into a computer.

BRIEF DESCRIPTION OF THE DRAWINGS

Example embodiments will become more fully understood from the detailed description given herein below and the accompanying drawings, which are given by way of illustration only and thus are not limiting of this disclosure.

FIG.1 is a schematic representation of an exemplary agent domain in a multiple domains network environment.
FIG.2. is a schematic representation of a distributed application deployed over multiple domains.
FIG.3A and FIG.3B are schematic representations of other examples of deployment of the distributed application described with reference to FIG.2.
FIG.4 is a schematic representation of a target graph relating to a target application.
FIG.5 is a schematic representation of the partition of the target graph depicted in FIG.4.
FIG.6 is a flowchart describing an example embodiment of an application management method as disclosed herein.
FIG.7 is a flowchart describing an example embodiment of an application agency method as disclosed herein.
FIG.8 is a schematic representation of a first exemplary discovery scheme used in the application management method, application agency method, an application manager and an application agent as disclosed herein.
FIG.9 is a second exemplary embodiment of a discovery scheme used in an application management method, application agency method, an application manager and an application agent as disclosed herein.
FIG.10 is a schematic representation of an apparatus comprising means for carrying out the application management method and/or the application agent method as disclosed herein.

DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

The exemplary embodiments disclosed herein apply in a network environment comprising multiple domains. A domain is an administrative and/or a technological concept grouping resources under the responsibility of one or more stakeholders e.g. legal and/or physical persons which share ownership of the resources. Resources include network resources and compute resources.

The exemplary embodiments disclosed herein relate to the distributed deployment of a target application in a multiple domains network environment and more particularly to the discovery of network resources and compute resources, in the multiple domains, that best meet the requirements of the target graph while being compliant with target parameters representative of End to End requirements or constraints to be met when deploying the target application.

The target application is composed of application component functions and intermediate communication flows represented as a target graph. The application component functions are advantageously defined as atomic components, which means either they cannot be further partitioned into subparts or they must be considered as one unique atomic component.

The discovery is initiated by an application manager and involves application agents. An application agent belongs to a specific domain, herein referred to as agent domain, and is responsible for discovering, in the agent domain, network and compute resources capable of mapping parts of the target graph and compliant with target parameters.

For initiating the discovery, the application manager sends a discovery request message to at least a first application agent in a first domain. During discovery, an application agent receives a discovery request message from the application manager or from a previous application agent in a previous domain. And for further discovery, the application agent sends a discovery request message to a next application agent in a next domain. For example, the application agent sends a discovery request message to all possible or to a selected list of next application agents in all possible or in a list of selected next domains. At least one of the input interfaces of the next domains is connected to one of the output interfaces of the agent domain. Advantageously, the next domains do not include the previous domains.

For example, the first domain can be a subnetwork of user equipment and/or IoT (Internet of Things) devices belonging to one stakeholder or different stakeholders when they are shared. For example, the application manager can be co-located with the first application agent in a user equipment in the first domain.

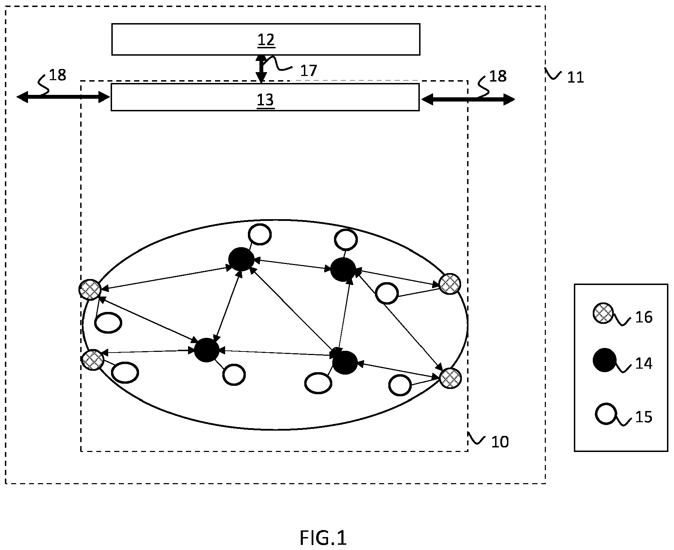

FIG.1 is a schematic representation of an exemplary agent domain 10 in a multiple domains network environment 11 comprising an application manager 12, and a plurality of domains.

In the example of FIG.1, the agent domain 10 comprises an application agent 13, a plurality of network resources 14 and a plurality of compute resources 15. The network resources 14 have interface awareness. The agent domain 10 is delineated by network interfaces 16 also referred to as peering points or border node or gateway. A peering point or border node or gateway is an inter-domain connection point that takes into account the direction of communication flows between domains. Two domains which are interfaced at the network layer are referred to as adjacent domains in the following of the description. Two adjacent domains have bipartite agreements between them meaning that dedicated interfaces and related procedures are defined such that a bidirectional communication channel can be set up between them: an application agent in an agent domain is able to understand and process messages and related protocols from / to an adjacent domain.

For example, the application agent 13 may be distributed and co-located with one or several peering points or nodes or gateways.

The application agent 13 is interfaced at the application layer with the application manager 12 through an application interface 17 and with other application agents in adjacent domains through application interfaces 18. The application agent 13 handles requests expressed at the application layer including receiving and sending discovery request messages relating to a target application to be deployed over the multiple domains.

Within the agent domain 10, the application agent 13 is interfaced directly or indirectly with the network and compute resources 14 and 15. The application agent is aware of some application details, such as functional and performance requirements and constraints, and it is capable of translating received discovery request messages into required network and compute resources to be discovered.

In a specific implementation of the invention, an application agent 13 may be distributed and co-located with one or several peering points or nodes or gateways.

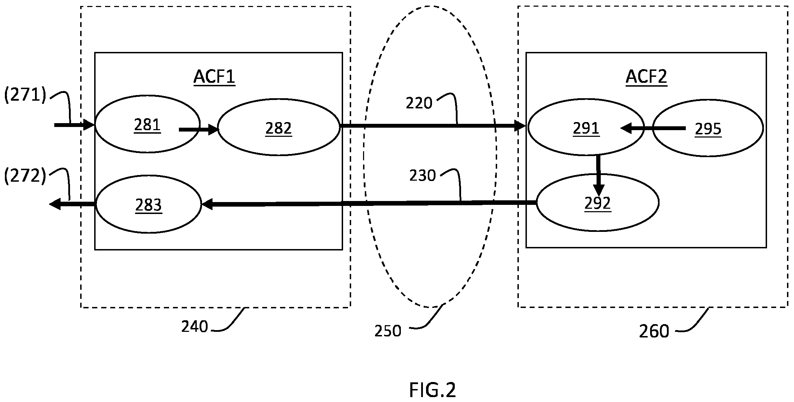

FIG.2 is a schematic representation of an example of a distributed application composed of two application component functions ACF1 and ACF2 and two intermediate communication flows 220 and 230, and deployed over three different domains 240, 250 and 260. The first domain 240 and the third domain 260 comprise network and compute resources. The second domain 250 comprises only network resources.

The first application component function ACF1 has a first physical interface 271 with the physical world to obtain data and a second physical interface 272 with the physical world to render data. The first application component function ACF1 involves multiple processing 281, 282 and 283 and is deployed over the first domain 240. The first intermediate communication flow 220 is directed from the first application component function ACF1 to the second application component function ACF2. The second intermediate communication flow 230 is directed from the second application component function ACF2 to the first application component function ACF1. Both intermediate communication flows 220 and 230 are essentially supported by the second domain 250 (there are a few network resources in first and third domains 240 and 260 participating into the support of intermediate communication flows 220 and 230; however, a key part of the network resources is provided by the second domain 250). The second application component function ACF2 involves multiple processing 291 and 292 and is deployed over the third domain 260.

For example, the target application is a distributed metaverse application. The first domain 240 is a subnetwork of user equipment. The three processing 281, 282 and 283 of the first application component function ACF1 are executed at a user equipment in the subnetwork of user equipment. The first physical interface 271 is a sensing device of the user equipment, for example a camera. The second physical interface 272 is a rendering device of the user equipment, for example a display. The three processing 281, 282, 283 include: sensing data from the physical world to obtain video data, pre-processing the video data, and rendering video data received from the second application component function ACF2. The third domain 260 is an edge cloud. The two processing 291 and 292 of the second application component function ACF2 are executed in a node in the edge cloud and include: synchronization and fusion of video data received from the first application component function ACF1 and video data obtained from a video game database 295, and video processing to provide actuated video data to the first application component function ACF1 for rendering. The second domain 250 is a network between the user equipment and the node in the edge cloud. It supports the intermediate communication flows 220 and 230 between the first and the second application component functions ACF1 and ACF2.

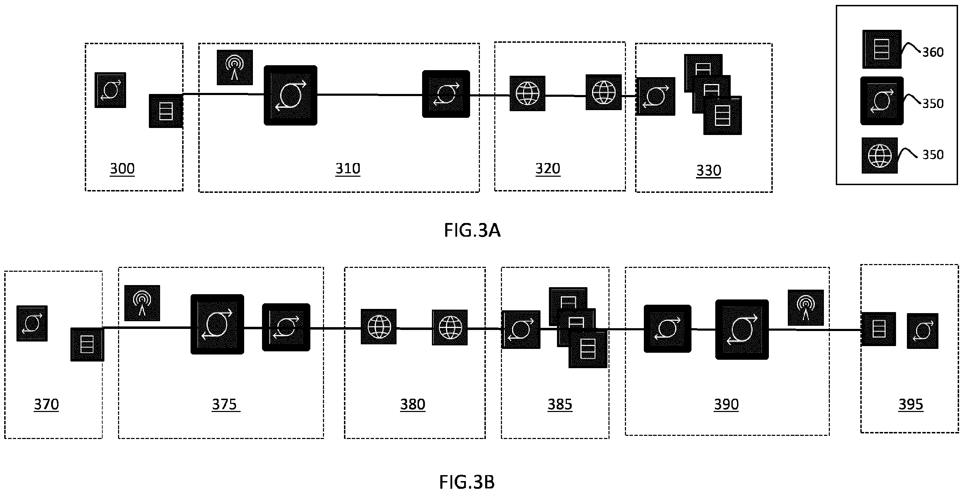

FIG.3A and FIG.3B are schematic representations of other examples of deployment of distributed application.

In the example of FIG.3A, an application is distributed over four domains 300, 310, 320 and 330. The first domain 300 supports a first application component function. The fourth domain 330 supports a second application component function. Intermediate communication flows between the first and the fourth domains 300 and 330 are (essentially) supported by the second and the third domains 310 and 320. The first and the fourth domains 300 and 330 comprise network resources 350 and compute resources 360. The second and the third domains comprise network resources 350. For example, the second domain 310 is an edge cloud and the third domain 320 is an IP wide area network.

In the example of FIG.3B, an application is distributed over six domains 370 to 395. The first domain 370 supports a first application component function. The fourth domain 385 supports a second application component function. The sixth domain 395 support a third application component function. Intermediate communication flows between the first and the fourth domains 370 and 385 are essentially supported by the second and the third domains 375 and 380. The first, the fourth and the sixth domains 370, 385 and 395 comprise network and compute resources. The second, the third and the fifth domains 35, 36 and 38 comprise network resources. For example, the second domain 375 is a mobile network and the third domain 380 is an IP wide area network. The fifth domain 390 is another mobile network and the sixth domain 395 is a subnetwork of user equipment. The fifth domain 390 supports intermediate communication flows between the fourth domain 385 and the sixth domain 395.

As will be further described below, the application component functions and intermediate communication flows composing a target application are represented as a target graph comprising nodes associated witho the application component functions and links associated to the intermediate communication flows between the application component functions.

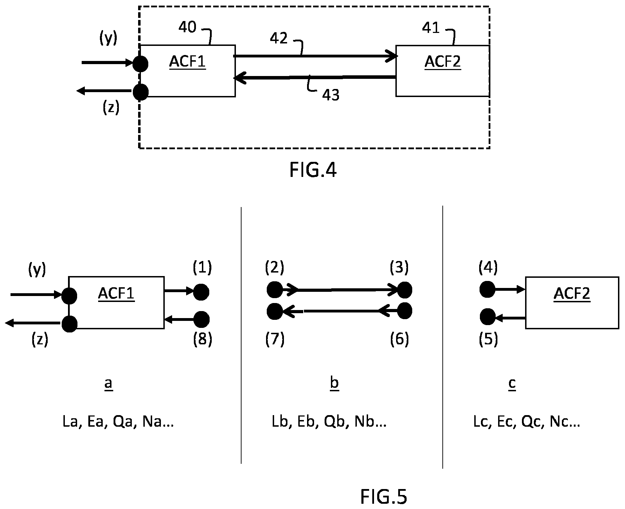

FIG.4 is a schematic representation of an exemplary target graph relating to the target application described with reference to FIG.2. The target graph illustrated in FIG.4 comprises a first node 40 representing the first application component function ACF1 and a second node 41 representing the second application component function ACF2. A first directed link 42 represents an application flow between ACF1 and ACFA and another directed link 43 represents another communication flow between ACF2 and ACF1

Target applications have requirements or constraints which need to be met for deployment. These requirements or constraints are expressed as target parameters. For example, in the metaverse application described with reference to FIG.2 a key requirement is the end-to-end application latency between the first and second physical interfaces 271 and 272, in other words between sensing data (such as video capturing) and rendering data (such as video displaying). Other examples of requirements relate to energy consumption, business cost, reliability, security, trust etc...

In the following of the description the assessment of the compliance of a deployment solution with application requirements is handled in a distributive manner, on a per domain basis, by considering additive contributions from all domains crossed during the discovery process. Examples will be given below with reference to FIG.5.

FIG.5 is a representation of a partition of the target graph depicted with reference to FIG.4 for a mapping in three domains a, b and c. A first part of the target graph corresponds to the first component function ACF1. It is mapped in the domain a. A second part of the target graph corresponds to the two intermediate communication flows between domain a and domain c. It is mapped in the domain b. A third part of the target graph corresponds to the second component function ACF2. It is mapped in the domain c.

Network interfaces denoted (1) to (8) are represented in FIG.5. The network interface (1) is an output interface of domain a. It is matched with an input interface (2) of domain b. The network interface (3) is an output interface of domain b. It is matched with an input interface (4) of domain b. The network interface (5) is an output interface of domain c. It is matched with an input interface (6) of domain b. The network interface (7) is an output interface of domain b. It is matched with an input interface (8) of domain a. As represented in FIG.5, the domain a has also a physical input interface (y) and a physical output interface (z).

For target parameters which are additive by nature, assuming that (1)=(2), (3)=(4), (5)=(6), and (7)=(8), an end-to-end metric associated with a target parameter can be calculated directly, on a per domain basis, by adding the contribution of all domains crossed during discovery.

For example, for latency, an end-to-end latency metric L which takes into account the communication latency and the processing latency, can be expressed as:

$$L = L_a + L_b + L_c$$

where $L_a$, $L_b$ and $L_c$ represent the latency introduced by domain a, b and c respectively and

$$L_a = L_{x-2} + L_{8-y}$$

$$L_b = L_{2-4} + L_{6-8}$$

$$L_c = L_{4-6}$$

The same applies to other additive target parameters for example the energy consumption or the cost. An end-to-end energy consumption metric E and an end-to-end cost metric Q can be expressed as follows:

$$E = E_a + E_b + E_c$$

$$Q = Q_a + Q_b + Q_c$$

By using metrics transformations, it is also possible to assess compliance in an additive manner, as described above, for target parameters which are not additive by nature.

Taking the example of the reliability, for each flow segment x-2, 8-y, 2-4, 4-6 and 6-8 in the multiple domain described in FIG.5, a probability of success $P_{x-2}$, $P_{8-y}$, $P_{2-4}$, $P_{4-6}$, and $P_{6-8}$ can be calculated.

Considering independent events, the end-to-end probability of success P is:

$$P = P_a * P_b * P_c = P_{x-2} * P_{8-y} * P_{2-4} * P_{4-6} * P_{6-8} .$$

Then applying a logarithmic transformation: $\ln(P) = \ln(P_a) + \ln(P_b) + \ln(P_c)$ which can be also written as $\ln(1 - R) = \ln(1 - R_a) + \ln(1 - R_b) + \ln(1 - R_c)$ where R is the end-to-end reliability and $R_a$, $R_b$, $R_c$ are the reliabilities associated with the domains a, b and c. Therefore, a metric N can be defined and used to assess compliance with the reliability requirement in an additive manner where:

$$N = \ln(1 - R) ; N_a = \ln(1 - R_a) ; N_b = \ln(1 - R_b) ; N_c = \ln(1 - R_c)$$

with $N = N_a + N_b + N_c$

An advantage of the embodiments described herewith is to allow for considering parameters at the application level, such as the processing latency, in addition to parameters at the network level, such as the communication latency. This is critical in many processing offload scenarios such as virtual reality or metaverse applications, where the processing latency e.g., at the application server is far from being negligible with respect to the communication latency.

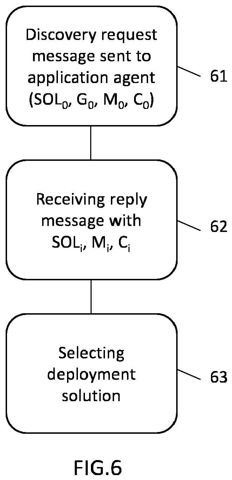

FIG.6 is a flow chart describing an exemplary embodiment of an application management method implemented in an application manager as disclosed herein for deploying a target application over multiple domains in a network environment. As depicted in FIG.6, the application management method comprises a step 61 of sending a discovery request message to an application agent. The discovery request message sent by the application manager comprises solution information SOLo, graph information Go and metric information $M_0$ and $C_0$. The solution information $SOL_0$ represents a null deployment solution for the target graph. The graph information $G_0$ relates to the target graph associated with the target application. The metric information $M_0$ and $C_0$ relate to two different target parameters associated with the target application, for example a performance related technical target parameter M such as latency, and a business target parameter C such as cost.

The application management method further comprises:

- a step 62 of receiving from one or more application agents in the multiple domains, deployment solutions which do provide a complete mapping of the target graph to network and compute resources in the multiple domains, and which are compliant with the target parameters, and
- a step 63 of selecting a deployment solution among the received deployment solutions.

Referring to the example of FIG.2, the discovery may start from the user equipment in the subnetwork 240 and continue by going progressively further away from the user equipment. In such a case, the application manager sends the discovery request message to the application agent of the user equipment.

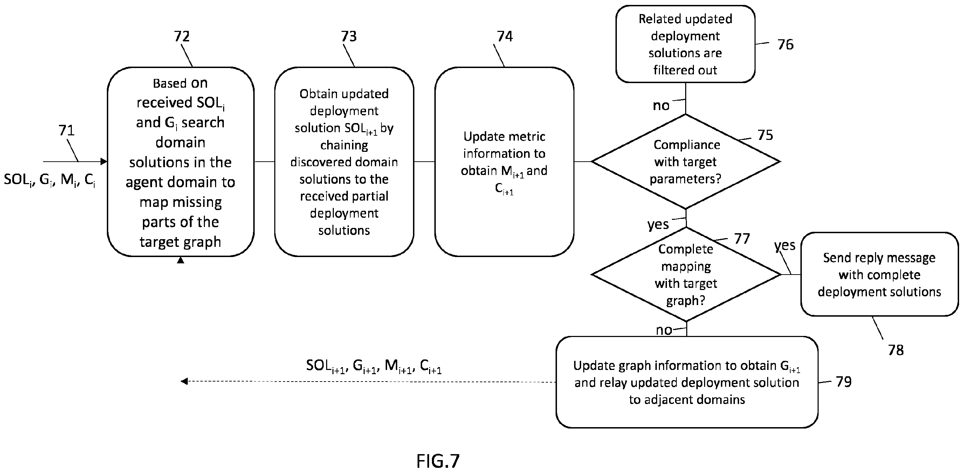

FIG.7 is a flowchart describing an exemplary embodiment of an application agency method implemented by an application agent as disclosed herein for the discovery, in the agent domain, of network and compute resources capable of mapping parts of the target graph.

As depicted in FIG.7, the application agency method comprises a step 71 of receiving a discovery request message from an application manager, or from a previous application agent in a previous domain. The discovery request message comprises solution information $SOL_i$ representative of zero, one or more partial deployment solutions for the target graph. When the discovery request message originates from a previous application agent, the partial deployment solutions have been previously discovered by one or more previous application agent in one or more previous domains. When the discovery request message originates from the application manager, the partial deployment solution is a null deployment solution.

The discovery request message also comprises graph information $G_i$ which enable determining missing parts of the target graph, and metric information $M_i$ and $C_i$ representative of how the partial deployment solutions impact the target parameters M and C associated with the target application,

The application agency method further comprises, upon reception of a discovery request message:

- a step 72 of searching domain solutions in the agent domain by mapping missing parts of the target graph obtained from the received graph information to network and compute resources in the agent domain;
- a step 73 of obtaining updated deployment solutions from the partial deployment solutions indicated by the solution information $SOL_i$ and the domain solutions obtained at step 72;
- a step 74 of updating the received metric information $M_i$ and $C_i$ to reflect how the updated deployment solutions impact the target parameters M and C;
- a step 75 of checking compliance of the updated deployment solutions with the target parameters;
- a step 77 of checking completeness of the mapping provided by the updated deployment solutions;
- a step 78 of sending a reply message to the application manager including updated deployment solutions which are compliant with the target parameters M and C and do provide a complete mapping of the target graph;
- a step 79 of updating the received graph information $G_i$ to take into account the updated deployment solutions and relaying the updated deployment solutions which are compliant but uncomplete to other application agents in adjacent domains by sending a discovery request message comprising updated solution information $SOL_{i+1}$ which identify the relayed updated deployment solutions, and the associated updated metric information $M_{i+1}$ and $C_{i+1}$ and updated graph information $G_{i+1}$.

Advantageously, as illustrated in FIG.7, non-compliant updated deployment solutions are filtered out at step 76 as a result of the compliance test performed at step 75. And checking the completeness of the compliant updated deployment solutions is done at step 77 prior to updating the graph information at step 79. In other words, updating the graph information $G_i$ is only performed for updated deployment solutions which are compliant with the target parameters M and C and do not provide a complete mapping of the target graph.

As can be understood from the above, the discovery is performed hop-by-hop by the application agents in the multiple domains. An application agent which receives a discovery request message, searches network and compute resources in its own agent domain to map part of the target graph, updates the information in the discovery request message ($SOL_i$, $G_i$, $M_i$, $C_i$) to take into account the domain solutions it has identified, and relays the discovery request message to other domains, on an adjacency basis, for further discovery of the parts of the target graph which are still missing in order to deploy the target application. Compliance with the target parameters is checked. The updated deployment solutions which are not compliant with the target parameters M and C are filtered out by the application agent so that they are not relayed to other application agents.

An advantage of the above-described discovery scheme is that the domains only share information relating to the deployment solutions not to the network and compute resources used to build the solutions. Knowledge about the implementation details of the domain solutions is stored locally in each domain and remains in each domain. It is not shared with adjacent domains. With this approach, the confidentiality/sensitiveness of the information which is relayed to other domains is very limited and does not or poorly affect domain privacy/confidentiality.

In an embodiment, domain solutions are identified by domain solution identifiers and the solution information $SOL_i$ comprises one or more chains of domain solution identifiers corresponding to a given partial deployment solution. In addition to identifying a domain solution, the domain solution identifier may also identify the application agent associated with the domain solution. And the application agency method may comprise a step of excluding from the relaying application agents identified in the chains of domain solution identifiers of the received solution information. By doing so, application agents which have already contributed to building the deployment solution are excluded from further discovery. This loop avoidance mechanism allows to limit the signaling weight of the discovery scheme.

To further limit the signaling weight of the discovery scheme, several additional steps may be implemented by the application agent, alone or in combination, for example:

- terminating discovery when no compliant updated deployment solutions providing a complete mapping of the target graph has been obtained after a certain condition is reached (for example a time-out condition or a Time-To-Live condition);
- terminating discovery upon reception of a discovery cancellation message from the application manager;
- terminating discovery when a first updated deployment solution is obtained which provide2s a complete mapping of the target graph.

In an embodiment, the discovery request message comprises configuration information CONF to configure the receiving application agent(s) with a discovery scheme. For example, the configuration information comprises one or more of the following:

- limit values $M_L$ and $C_L$ for testing compliancy of the partial deployment solutions with the target graph and the target parameters M and C,
- a filtering rule to be applied to filter out updated deployment solutions that are not compliant with the target parameters (for example filter out all updated deployment solutions for which the updated metric information $M_{i+1}$ and $C_{i+1}$ meet the following conditions $M_{i+1}>M_L$ or $C_{i+1}>C_L$);
- a relaying rule to be applied to relay updated deployment solutions that are compliant with the target parameters (for example terminating the discovery after a certain condition is reached (e.g. time-out or Time-To-Live) or when a first updated deployment is obtained which provides a complete mapping of the target graph or upon reception of a discovery cancellation message);
- a reply rule to be applied for sending a reply message to the application manager (for example an encryption rule);
- the target graph.

Alternatively, such configuration information may be broadcasted by the application manager to all application agents in the multiple domains.

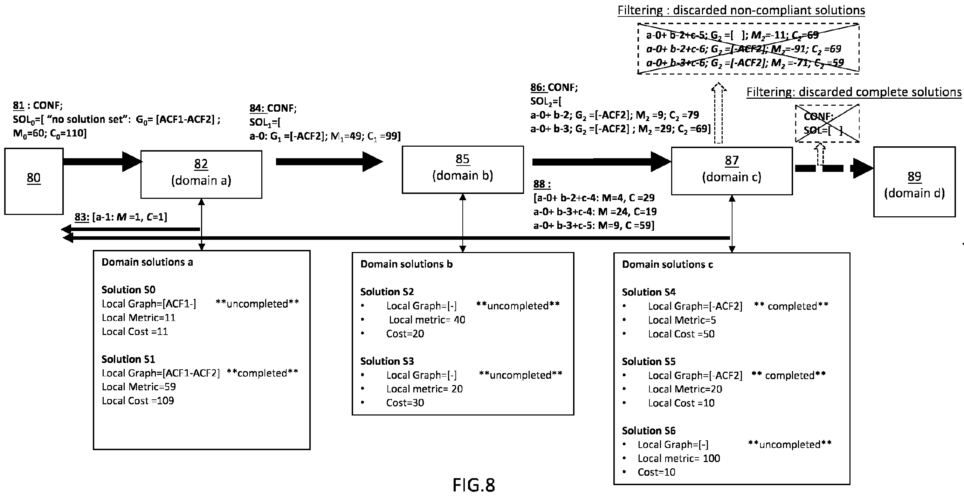

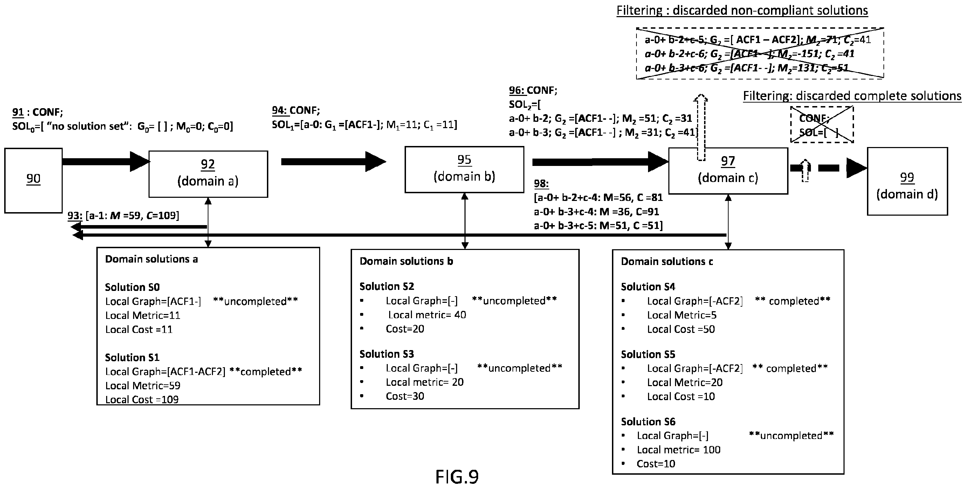

FIG.8 and FIG.9 are schematic representations of two different exemplary discovery scheme to be implemented by the application manager and the application agents to discover deployment solutions for a target application. The target graph used in these two examples is the target graph described with reference to FIG.4. The multi-domain represented in FIG.8 and FIG.9 includes 4 domains referred to as a, b, c and d.

The discovery scheme described in FIG.8 is referred to as decremental scheme,

In this decremental scheme, the application management method initializes the graph information to the target graph. And the application agency method includes decrementing the graph by removing parts of the target graph corresponding to the domain solutions obtained by the application agent. In other words, the graph information initially represents a complete target graph. Parts of the target graph which are mapped during discovery are removed from the graph information so that the graph information comprises only the parts of the graph which are missing to deploy the target application.

As illustrated in FIG.8, an application manager 80 sends a discovery request message 81 to a first application agent 82 in domain a.

The discovery request message 81 comprises solution information SOLo, graph information $G_0$ and metric information $M_0$ and $C_0$. Optionally the discovery request message 81 also comprises configuration information CONF.

The solution information $SOL_0$ is representative of a null deployment solution. The graph information G0 is initialized to the target graph denoted G=[ACF1-ACF2], where ACF1 is the first application component function and ACF2 is the second application component function. The metric information $M_0$ and $C_0$ are initialized to the limit values $M_L$ and $C_L$ (in this example, $M_L$ = 60 and $C_L$ = 110).

The application agent 82 searches for domain solutions in its own domain (the agent domain). Two domain solutions are obtained: Solution 0 and Solution 1. Solution 0 maps the first application component function ACF1 with network and compute resources in the agent domain. The domain solution S0 is identified by a domain solution identifier a-0. The domain solution S1 is identified by a domain solution identifier a-1. As the application agent 82 is the first application agent in the discovery process, the domain solutions S0 and S1 constitute the updated deployment solutions. The domain solution S0 maps network and compute resources in the agent domain with a part of the target graph referred to as [AFC1-]. It constitutes an uncomplete updated deployment solution as it doesn't provide a mapping of all missing parts of the target graph G, as identified from the graph information $G_0$. The domain solution S1 maps network and compute resources in the agent domain with the complete target graph [ACF1-ACF2]. The domain solution S1 constitutes a complete updated deployment solution. The application agent 82 calculates the contribution of the domain solutions S0 and S1 to the two target parameters M and C. The impact of the domain solution S0 on the target parameter M is 11. The impact of the domain solution S1 on the target parameter M is 59. The impact of the domain solution S0 on the target parameter C is 11. And the impact of the domain solution S1 on the target parameter C is 109. The application agent 82 calculates the updated metric information $M_1$ and $C_1$ for the updated deployment solutions. In this example the metric information has been initialized with the limit values of the target parameters and are decremented to reflect the contribution of the domain solutions. For solution S0: $M_1$=60-11=49 and $C_1$=110-11=99. And for solution S1: $M_1$=60-59=1 and $C_1$=110-109=1.

The application agent 82 checks the compliance of the updated deployment solutions with the limit values $M_L$ and $C_L$ set for the target parameters (in this embodiment, an updated domain solution is considered as compliant when $M_i \geq 0$ and $C_i \geq 0$). Both updated deployment solutions S0 and S1 are compliant. The application agent 82 sends a reply message 83 to the application manager 80 which comprises the complete updated deployment solution S1 and the associated metric information $M_1$ =1 and $C_1$ =1.

The application agent 82 updates the graph information so that the updated graph information $G_1$ is representative of the parts of the target graph G which are still missing after the domain solution S0 has been taken into account. The updated graph information associated with the domain solution S0 is $G_1$=[-AFC2].

Then the application agent 82 sends a discovery request message 84 to a next application agent 85 in an adjacent domain b for further discovery based on the uncomplete updated deployment solution a-0 discovered by the domain a.

The discovery request message 84 comprises solution information SOL1, graph information G1, metrics information M, and $C_1$. Optionally the discovery request message 84 also comprises the configuration information CONF. The solution information SOL1 comprises the domain solution identifier a-0 which is representative of the domain solution S0 previously discovered by the previous application agent 82 in domain a. This solution S0 is a partial deployment solution for the target application. The graph information $G_1$ = [-AFC2] represents the missing parts of the target graph which are still to be discovered. And the metric information $M_1$ and $C_1$ are set to the updated value calculated by the previous application agent 82 in relation to the updated deployment solution S0: $M_1$=49 and $C_1$=99.

The application agent 85 repeats in domain b the process described above in relation to domain a. Two domain solutions are found: the domain solution S2 identified by a domain solution identifier b-2 and the domain solution S3 identified by a domain solution identifier b-3. Both domain solution S2 and S3 provide a mapping between network resources in the domain b and a part of the graph represented as [ - ].

Two updated deployment solutions are obtained by the application agent 85 starting from the partial deployment solution received in the discovery request message 84: a first updated domain solution which combines the domain solutions a-0 and b-2 and which is identified by a first chain of domain solution identifiers denoted a-0+b-2, and a second updated domain solution which combines the domain solutions a-0 and b-3 and which is identified by a second chain of domain solution identifiers denoted a-0+b-3.

Both updated deployment solutions are uncomplete as they don't provide a complete mapping of all missing parts of the target graph G (the missing parts are obtained by the application agent 85 from the received graph information $G_1$).

The impact of the domain solution S2 on the target parameter M is 40. The impact of the domain solution S3 on the target parameter M is 20. The impact of the domain solution S2 on the target parameter C is 20. And the impact of the domain solution S3 on the target parameter C is 30. For the domain solution S2: $M_2$=49-40=9 and $C_2$=99-20=79. And for solution S3: $M_2$=49-20=29 and $C_2$=99-30=69.

Both updated deployment solutions are uncomplete and compliant with the limit values set for the target parameters. Therefore, the application agent 85 sends a discovery request message 86 to a next application agent 87 in an adjacent domain c for further discovery based on the uncomplete updated deployment solutions identified by the chains of domain solution identifiers a-0+b-2 and a-0+b-3. These two uncomplete updated deployment solutions constitute two partial deployment solutions for the next application agent 87.

The discovery request message 86 comprises two sets of solution information $SOL_2$, graph information $G_2$, metrics information $M_2$ and $C_2$, associated with the two partial deployment solutions. Optionally the discovery request message 86 also comprises the configuration information CONF.

In relation with the first partial deployment solution, the solution information $SOL_2$ comprises the chain of domain solution identifiers a-0+b-2. The graph information $G_2$ = [-AFC2] represents the missing parts of the target graph which are still to be discovered. And the metric information $M_2$ and $C_2$ are set to the updated value calculated by the previous application agent 85 for the first partial deployment solution $M_2$=9 and $C_2$=79.

In relation with the second partial deployment solution, the solution information $SOL_2$ comprises the chain of domain solution identifiers a-0+b-3. The graph information $G_2$ = [-AFC2] represents the missing parts of the target graph which are still to be discovered. And the metric information $M_2$ and $C_2$ are set to the updated value calculated by the application agent 85 for the second partial deployment solution $M_2$=29 and $C_2$=69.

The application agent 87 repeats in domain c the process described above in relation to domain a and b for the first and second partial deployment solutions.

Three domain solutions S4, S5 and S6 are found in the domain c: the domain solution S4 identified by a domain solution identifier c-4 and the domain solution S5 identified by a domain solution identifier c-5 and the domain solution S6 identified by a domain solution identifier c-6. The two domain solutions S4 and S5 provide a mapping between network and compute resources in the domain c and a part of the graph represented as [ -ACF2 ]. The domain solution S6 provides a mapping between network resources in the domain c and a part of the graph represented as [ - ].

Based on these three domain solutions S4, S5, S6 and the two partial deployment solution received in the discovery request message 86, the application agent 87 obtains six updated deployment solutions.

A first updated deployment solution is identified by a first chain of domain solution identifiers denoted a-0+b-2+c-4. This first updated deployment solution is associated with the updated metric information $M_3$ = 4 and $C_3$ = 29. It provides a complete mapping of the target graph and it is compliant with the target parameters. Therefore, this first updated deployment solution is included in a reply message 88 sent to the application manager 80.

A second updated deployment solution is identified by a second chain of domain solution identifiers denoted a-0+b-2+c-5. This second updated deployment solution is associated with the updated metric information $M_3$ = - 11 and $C_3$ = 69. It provides a complete mapping of the target graph but it is not compliant with the target parameters. Therefore, this second updated deployment solution is discarded. It is not relayed to another application agent. And it is not included in the reply message 88.

A third updated deployment solution is identified by a third chain of domain solution identifiers denoted a-0+b-2+c-6. This third updated deployment solution is associated with the updated metric information $M_3$ = - 91 and $C_3$ = 69. It doesn't provide a complete mapping of the target graph and it is not compliant with the target parameters. Therefore, this third updated deployment solution is discarded. It is not relayed to another application agent. And it is not included in the reply message 88.

A fourth updated deployment solution is identified by a fourth chain of domain solution identifiers denoted a-0+b-3+c-4. This fourth updated deployment solution is associated with the updated metric information $M_3$= 24 and $C_3$ = 19. It provides a complete mapping of the target graph and it is compliant with the target parameters. Therefore, this fourth updated deployment solution is included in the reply message 88 sent to the application manager 80.

A fifth updated deployment solution is identified by a fifth chain of domain solution identifiers denoted a-0+b-3+c-5. This fifth updated deployment solution is associated with the updated metric information $M_3$ = 9 and $C_3$ = 15. It provides a complete mapping of the target graph and it is compliant with the target parameters. Therefore, this fifth updated deployment solution is included in the reply message 88 sent to the application manager 80.

A sixth updated deployment solution is identified by a sixth chain of domain solution identifiers denoted a-0+b-3+c-6. This sixth updated deployment solution is associated with the updated metric information $M_3$ = - 71 and $C_3$ = 59. It doesn't provide a complete mapping of the target graph and it is not compliant with the target parameters. Therefore, this sixth updated deployment solution is discarded. It is not relayed to another application agent. And it is not included in the reply message 88.

The successive explorations in different domains a, b and c yield to cumulated sets of different domain solutions. A domain solution is identified by a domain solution identifier and a set of domain solutions is identified by a chain of domain solution identifiers.

In this example, the application manager 80 receives two reply messages 83 and 88 with four deployment solutions identified by a-1, a-0+b-2+c-4; a-0+b-3+c-4 and a-0+b-3+c-5. The application manager selects one of the deployment solutions. The discovery is terminated by domain c. The fourth domain d doesn't receive any discovery request messages.

FIG.9 is a schematic representation of an embodiment of a second discovery scheme, referred to as incremental scheme, to be implemented by the application manager and the application agent. In this incremental scheme, the application management method initializes the graph information to an empty graph. And the application agent increments the graph information by adding parts of the target graph corresponding to the domain solutions obtained by the application agent. In other words, the graph information initially represents an empty graph which is built up during the discovery by adding the parts of the target graph which are successfully mapped with network and compute resources in the domains that are crossed. In this case the missing parts of the target graph are obtained from the graph information by comparison with the complete target graph. This means that the complete target graph must be otherwise known to all application agents. In the example depicted in FIG.9 the complete target graph is shared with the application agents in the configuration information CONF.

The process implemented in FIG.9 is similar to the process implemented in FIG.8 with the first difference that the graph information is incremented rather than decremented: the initial graph information is empty as all parts of the graph are missing initially (Go = [ ]). After the discovery of the first partial deployment solution a-0 by domain a, the graph information is updated to $G_1$ = [AFC1-]. By comparison with the target graph G=[ACF1-ACF2], the graph information $G_1$ indicates that the missing part of the target graph is [-ACF2]. Similarly, after the discovery of the first partial solution a-0+b-2 by the domain b, the graph information is updated to $G_2$ = [AFC1-]. By comparison with the target graph G=[ACF1-ACF2], the graph information $G_2$ indicates that the missing part of the target graph is [-ACF2]. The same applies with the second partial deployment solution a-0+b-3.

As second difference between the implementation described with reference to FIG.7 and FIG.8 is that the metric information is initially set to a null value and is incremented throughout the discovery process rather than decremented. For example, the values of the information metric $M_1$ and $C_1$ associated with the updated deployment solution a-0 are $M_1$=0+11=11 and $C_1$=0+11=11. The values of the information metric $M_1$ and $C_1$ associated with the updated deployment solution a-0 +b-2+c-4 are $M_1$=11+40+5=56 and $C_1$=11+20+50=81. In this embodiment, updated domain solutions are compliant when $M_i \leq M_L$ and $C_i \leq C_L$. In the example of FIG.9 $M_L$ = 60 and $C_L$ = 110.

It is possible to mix a decremental scheme for the graph information and an incremental scheme for the metric information or in vice-versa.

Although for simplicity reasons, the embodiments described above relate to a target application with two application component functions, it will be understood that the present disclosure applies to any number of application component functions and intermediate communication flows.

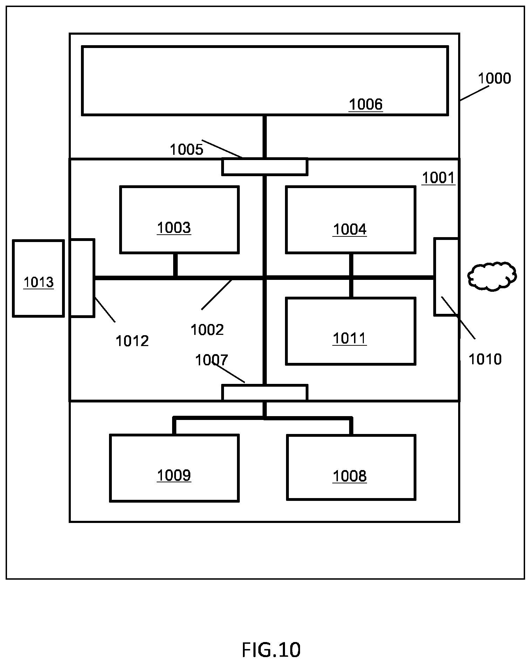

FIG. 10 depicts a high-level block diagram of an apparatus 1000 suitable for implementing various aspects of the disclosure. Although illustrated in a single block, in other embodiments the apparatus 1000 may also be implemented using parallel and distributed architectures. Thus, for example, various steps such as those illustrated in the methods described above by reference to FIG.6 to 9 may be executed using apparatus 1000 sequentially, in parallel, or in a different order based on particular implementations. The application manager 12 and the application agent 13 of FIG.1 can be implemented in the form of apparatus 1000.

According to an exemplary embodiment, depicted in FIG.10, apparatus1000 comprises a printed circuit board 1001 on which a communication bus 1002 connects a processor 1003 (e.g., a central processing unit "CPU"), a random access memory 1004, a storage medium 1011, possibly an interface 1005 for connecting a display 1006, a series of connectors 1007 for connecting user interface devices or modules such as a mouse or trackpad 1008 and a keyboard 1009, a wireless network interface 1010 and/or a wired network interface 1012. Depending on the functionality required, the apparatus may implement only part of the above. Certain modules of FIG. 10 may be internal or connected externally, in which case they do not necessarily form integral part of the apparatus itself. E.g. display 1006 may be a display that is connected to the apparatus only under specific circumstances, or the apparatus may be controlled through another device with a display, i.e. no specific display 1006 and interface 1005 are required for such an apparatus. Memory 1011 contains software code which, when executed by processor 1003, causes the apparatus to perform the methods described herein. In an application agent apparatus, memory 1011 can also store domain solutions and associated information as described above, as well as configuration information. In an application manager apparatus, memory 1011 can store the complete deployment solutions received in reply messages. In an exemplary embodiment, a detachable storage medium 1013 such as a USB stick may also be connected. For example, the detachable storage medium 1013 can hold the software code to be uploaded to memory 1011.

The processor 1003 may be any type of processor such as a general-purpose central processing unit ("CPU") or a dedicated microprocessor such as an embedded microcontroller or a digital signal processor ("DSP").

In addition, apparatus 1000 may also include other components typically found in computing systems, such as an operating system, queue managers, device drivers, or one or more network protocols that are stored in memory 1011 and executed by the processor 1003.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. An application management method for deploying a target application over multiple domains in a network environment, a domain comprising either network resources or both network and compute resources, and an application agent responsible for discovering, in the domain, network and compute resources capable of mapping parts of the target application, the target application being composed of application component functions and intermediate communication flows represented as a target graph, the application management method comprising :

   - sending a discovery request message to an application agent, for distributed discovery of deployment solutions for the target application across the multiple domains, said discovery request message comprising:

- solution information representative of a null deployment solution for the target graph,
- graph information relating to the target graph, and
- metric information relating to one or more target parameters associated with the target application,

- receiving from one or more application agents in the multiple domains, deployment solutions which do provide a complete mapping of the target graph to network and compute resources, said deployment solutions being compliant with the target parameters,
- selecting a deployment solution among the received deployment solutions.

2. An application agency method for use in an agent domain in a multiple domains network environment, the agent domain comprising either network resources or both network and compute resources, and an application agent responsible for discovering network and compute resources in the agent domain for deploying a target application composed of applications component functions and intermediate communication flows represented by a target graph, said application agency method comprising:

- receiving a discovery request message from an application manager, or from a previous application agent in a previous domain, said discovery request message comprising:

- solution information representative of zero, one or more partial deployment solutions for the target graph, said partial deployment solutions being previously discovered by one or more previous application agent in one or more previous domains when the discovery request message originates from a previous application agent, and said partial deployment solution being a null deployment solution when the discovery request message originates from the application manager,
- graph information which enable determining missing parts of the target graph, and
- metric information representative of how the partial deployment solutions impact one or more target parameters associated with the target application,

- and, upon reception of said discovery request message:

- searching domain solutions in the agent domain by mapping missing parts of the target graph to network and compute resources in the agent domain, said missing parts being obtained from the received graph information,
- obtaining updated deployment solutions from the partial deployment solutions and the domain solutions,
- updating the received metric information to reflect how the updated deployment solutions impact the target parameters,
- updating the received graph information to take into account the updated deployment solutions,
- relaying updated deployment solutions which are compliant with the target parameters and do not provide a complete mapping of the target graph to one or more next application agents for further discovery,
- sending a reply message to the application manager including updated deployment solutions which are compliant with the target parameters and do provide a complete mapping of the target graph.

3. An application agency method as claimed in claim 2, wherein the solution information comprises one or more chains of domain solution identifiers, wherein a given chain corresponds to a given partial deployment solution and a domain solution identifier in the given chain identifies a given domain solution part of the given partial deployment solution.

4. An application agency method as claimed in claim 3, wherein the domain solution identifier further identifies the application agent associated with the domain solution, and the application agency method comprises excluding application agents identified in the chains of domain solution identifiers of the received solution information from relaying.

5. An application management method as claimed in claim 1, further comprising initializing the graph information to the target graph or to an empty graph.

6. An application agency method as claimed in any of claims 2 to 4, wherein updating the received graph information comprises:

- when the graph information is initialized to the target graph by the application manager, decrementing the graph information by removing parts corresponding to the domain solutions obtained by the application agent, or
- when the graph information is initialized to an empty graph by the application manager, incrementing the graph information by adding parts corresponding to the domain solutions obtained by the application agent.

7. An application management method as claimed in claim 1 or 5, further comprising initializing the metric information to the target parameters or to a null value.

8. An application agency method as claimed in any of claims 2 to 4 or 6, wherein updating the received metric information comprises:

   - when the metric information is initialized to the target parameters by the application manager, decrement the received metric information to reflect how the domain solutions obtained by the application agent impact the target parameters, or
   - when the metric information is initialized to a null value by the application manager, increment the received metric information to reflect how the domain solutions obtained by the application agent impact the target parameters.

9. An application management method as claimed in any claims 1 or 5 or 7, or an application agency method as claimed in claim 2 to 4 or 6 or 8, wherein the target parameters relate to a latency requirement and/or an energy consumption requirement and/or a business cost requirement and/or a reliability requirement, and/or a security requirement, and/or a trust requirement.

10. An application management method as claimed in any of claims 1 or 5 or 7 or 9, or an application agency method as claimed in claim 2 to 4 or 6 or 8 or 9, wherein the discovery request message comprises configuration information to configure the receiving application agent with a discovery scheme.

11. An application management method or an application agency method as claimed in claim 10, wherein the configuration information comprises:

   - limit values for testing compliancy of the partial deployment solutions with the target graph and the target parameters, and
   - a filtering rule to be applied to filter out updated deployment solutions that are not compliant with the target parameters; and/or a relaying rule to be applied to relay updated deployment solutions that are compliant with the target parameters; and/or a reply rule to be applied for sending a reply message including updated deployment solutions which are compliant with the target parameters.

12. An application management method as claimed in claim 10 or 11, wherein the configuration information comprises the target graph.

13. An application management method as claimed in any of claim 10 to 12, wherein the configuration information comprises a condition for terminating the discovery.

14. An application agency method as claimed in any of claims 2 to 4 or 6 or 8 to 10, further comprising terminating discovery when no compliant updated deployment solutions providing a complete mapping of the target graph has been obtained after a certain condition is reached.

15. An application agency method as claimed in any of claims 2 to 4 or 6 or 8 to 10 , further comprising terminating discovery upon reception of a discovery cancellation message from the application manager.

16. An application agency method as claimed claim 2 to 4, or 6 or 8 to 10 or 14 or 15, wherein the domain solution is defined according to one or more input interfaces of the agent domain and one or more output interfaces from the agent domain, the intermediate communication flows being directed from the one or more input interfaces to the one or more output interfaces.

17. An application manager comprising means for performing the steps of an application management method as claimed in any of claims 1 or 5 or 7 or 9 to 13.

18. An application agent comprising means for performing the steps of an application agency method as claimed in any of claims 2 to 4, or 6 or 8 to 10 or 14 to 16.

FIG.1

EP 4 498 232 A1

FIG.2

FIG.3A

FIG.3B

FIG.4

a

La, Ea, Qa, Na...

b

Lb, Eb, Qb, Nb...

c

Lc, Ec, Qc, Nc...

FIG.5

Discovery request
message sent to
application agent
$(SOL_0, G_0, M_0, C_0)$ — 61

Receiving reply
message with
$SOL_i, M_i, C_i$ — 62

Selecting
deployment
solution — 63

FIG.6

$SOL_i$, $G_i$, $M_i$, $C_i$

71

72

Based on received $SOL_i$ and $G_i$ search domain solutions in the agent domain to map missing parts of the target graph

73

Obtain updated deployment solution $SOL_{i+1}$ by chaining discovered domain solutions to the received partial deployment solutions

74

Update metric information to obtain $M_{i+1}$ and $C_{i+1}$

76

Related updated deployment solutions are filtered out

no

75

Compliance with target parameters?

yes

77

Complete mapping with target graph?

yes

78

Send reply message with complete deployment solutions

no

79

Update graph information to obtain $G_{i+1}$ and relay updated deployment solution to adjacent domains

$SOL_{i+1}$, $G_{i+1}$, $M_{i+1}$, $C_{i+1}$

FIG.7

Filtering : discarded non-compliant solutions

a-0+ b-2+c-5; $G_2$ =[   ]; $M_2$=-11; $C_2$=69
a-0+ b-2+c-6; $G_2$ =[-ACF2]; $M_2$ =-91; $C_2$ =69
a-0+ b-3+c-6; $G_2$ =[-ACF2]; $M_2$ =-71; $C_2$ =59

Filtering: discarded complete solutions

86: CONF;
$SOL_2$=[
a-0+ b-2; $G_2$ =[-ACF2]; $M_2$ =9; $C_2$ =79
a-0+ b-3; $G_2$ =[-ACF2] ; $M_2$ =29; $C_2$ =69]

81 : CONF;
$SOL_0$=[ "no solution set": $G_0$= [ACF1-ACF2] ;
$M_0$=60; $C_0$=110]

84: CONF;
$SOL_1$=[
a-0: $G_1$ =[-ACF2]; $M_1$=49; $C_1$ =99]

CONF;
SOL=[ ]

80

82
(domain a)

85
(domain b)

87
(domain c)

89
(domain d)

83: [a-1: $M$ =1, $C$=1]

88 :
[a-0+ b-2+c-4: M=4, C =29
a-0+ b-3+c-4: M =24, C=19
a-0+ b-3+c-5: M=9, C =59]

**Domain solutions a**

**Solution S0**
Local Graph=[ACF1-]    **uncompleted**
Local Metric=11
Local Cost =11

**Solution S1**
Local Graph=[ACF1-ACF2]  **completed**
Local Metric=59
Local Cost =109

**Domain solutions b**

**Solution S2**
- Local Graph=[-]    **uncompleted**
- Local metric= 40
- Cost=20

**Solution S3**
- Local Graph=[-]     **uncompleted**
- Local metric= 20
- Cost=30

**Domain solutions c**

**Solution S4**
- Local Graph=[-ACF2]   ** completed**
- Local Metric=5
- Local Cost =50

**Solution S5**
- Local Graph=[-ACF2]  ** completed**
- Local Metric=20
- Local Cost =10

**Solution S6**
- Local Graph=[-]     **uncompleted**
- Local metric= 100
- Cost=10

FIG.8

Filtering : discarded non-compliant solutions

a-0+ b-2+c-5; $G_2$ =[ ACF1 – ACF2]; $M_2$=71; $C_2$=41
a-0+ b-2+c-6; $G_2$ =[ACF1- -]; $M_2$=-151; $C_2$ =41
a-0+ b-3+c-6; $G_2$ =[ACF1- -]; $M_2$=131; $C_2$=51

**91 : CONF;**
$SOL_0$=[ "no solution set": $G_0$= [ ] ; $M_0$=0; $C_0$=0]

**94: CONF;**
$SOL_1$=[a-0: $G_1$ =[ACF1-]; $M_1$=11; $C_1$ =11]

**96: CONF;**
$SOL_2$=[
a-0+ b-2; $G_2$ =[ACF1- -]; $M_2$ =51; $C_2$ =31
a-0+ b-3; $G_2$ =[ACF1- -] ; $M_2$ =31; $C_2$ =41]

Filtering: discarded complete solutions

CONF;
SOL=[ ]

| 90 | 92 (domain a) | 95 (domain b) | 97 (domain c) | 99 (domain d) |

**93:** [a-1: $M$ =59, $C$=109]

**98:**
[a-0+ b-2+c-4: M=56, C =81
a-0+ b-3+c-4: M =36, C=91
a-0+ b-3+c-5: M=51, C =51]

**Domain solutions a**

**Solution S0**
Local Graph=[ACF1-]     **uncompleted**
Local Metric=11
Local Cost =11

**Solution S1**
Local Graph=[ACF1-ACF2] **completed**
Local Metric=59
Local Cost =109

**Domain solutions b**

**Solution S2**
- Local Graph=[-]     **uncompleted**
- Local metric= 40
- Cost=20

**Solution S3**
- Local Graph=[-]     **uncompleted**
- Local metric= 20
- Cost=30

**Domain solutions c**

**Solution S4**
- Local Graph=[-ACF2]    ** completed**
- Local Metric=5
- Local Cost =50

**Solution S5**
- Local Graph=[-ACF2]    ** completed**
- Local Metric=20
- Local Cost =10

**Solution S6**
- Local Graph=[-]        **uncompleted**
- Local metric= 100
- Cost=10

FIG.9

FIG.10

Europäisches
Patentamt

European
Patent Office

Office européen
des brevets

# EUROPEAN SEARCH REPORT

**Application Number**

EP 24 18 7735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 865 888 B1 (QURESHI WAHEED [US] ET AL) 4 January 2011 (2011-01-04) * abstract * * column 3, line 40 - column 25, line 19 * ----- | 1-18 | INV. G06F8/60 |
| A | US 10 673 716 B1 (SETHURAMALINGAM EKANTH [US] ET AL) 2 June 2020 (2020-06-02) * the whole document * ----- | 1-18 | |

**TECHNICAL FIELDS SEARCHED (IPC)**

G06F

The present search report has been drawn up for all claims

| Place of search | Date of completion of the search | Examiner |
|---|---|---|
| The Hague | 16 December 2024 | Renault, Sophie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 18 7735

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | | Publication date | Patent family member(s) | | Publication date |
|---|---|---|---|---|---|
| US 7865888 | B1 | 04-01-2011 | US | 7490073 B1 | 10-02-2009 |
| | | | US | 7788536 B1 | 31-08-2010 |
| | | | US | 7865888 B1 | 04-01-2011 |
| | | | US | 7870550 B1 | 11-01-2011 |
| | | | US | 7900201 B1 | 01-03-2011 |
| | | | US | 7954090 B1 | 31-05-2011 |
| | | | US | 7996814 B1 | 09-08-2011 |
| | | | US | 8001527 B1 | 16-08-2011 |
| | | | US | 8170975 B1 | 01-05-2012 |
| | | | US | 8180724 B1 | 15-05-2012 |
| US 10673716 | B1 | 02-06-2020 | NONE | | |

EPO FORM P0459

For more details about this annex : see Official Journal of the European Patent Office, No. 12/82